# EUROPEAN PATENT SPECIFICATION

(11) **EP 3 413 475 B1**
(45) Date of publication and mention of the grant of the patent: **13.11.2019**
(21) Application number: 17174509.4
(22) Date of filing: 06.06.2017
(51) Int. Cl.: H04B 7/026, H04W 88/04, H04W 74/02, H04B 7/26

(54) **SYSTEM FOR COMMUNICATION BETWEEN A USER TERMINAL AND A SERVER STATION**
VERFAHREN ZUR KOMMUNIKATION ZWISCHEN EINEM BENUTZERENDGERÄT UND EINER SERVERSTATION
SYSTÈME DE COMMUNICATION ENTRE UN TERMINAL D'UTILISATEUR ET UNE STATION SERVEUR

(43) Date of publication of application: 12.12.2018
(73) Proprietor: Kapsch CarrierCom AG, 1120 Wien (AT)
(72) Inventor: BEICHT, Peter, 88682 Salem (DE); JACQUES, Roger, 78320 Lévis Saint Nom (FR); GRUET, Christophe, 78180 Montigny le Bretonneux (FR); TANE, Pierre, 92100 Boulogne-Billancourt (FR)
(74) Representative: Weiser & Voith Patentanwälte Partnerschaft

(56) References cited:
- EP-A1- 1 601 136
- DE-C1- 19 547 467
- US-A1- 2013 070 687
- US-A1- 2014 045 491
- AWAD MOUSTAFA M ET AL: "Novel system architecture for railway wireless communications", IEEE EUROCON 2017 -17TH INTERNATIONAL CONFERENCE ON SMART TECHNOLOGIES, IEEE, 6 July 2017 (2017-07-06), pages 877-882, XP033143444, DOI: 10.1109/EUROCON.2017.8011237 [retrieved on 2017-08-15]

## Description

The present invention relates to a system for communicating between a user terminal and a server station, the user terminal being configured to move along a one-dimensional track and to communicate with the server station via a cellular network in a first communication mode.

Communication between a train and a railway service server is usually performed over a cellular network, which can be operated, e.g., according to GSM (Global System for Mobile Communications) or LTE (Long Term Evolution). Stable connections to the railway service server have a high priority for trains since they exchange safety critical messages relating to the operation of the train. However, it is evident that radio communications via cellular networks are sometimes interrupted due to interferences caused by obstacles in the communication path or by third party communication devices that broadcast information in same or adjacent communication resources, e.g., frequency slots.

In the state of the art this problem has been solved by introducing more cells within the cellular network to obtain denser coverage areas, for example, by employing micro cells within the cellular network. Furthermore, repeaters for those cells can be employed to extend the coverage areas of the respective cells.

It is an object of the invention to provide a communication system that has an inherently higher safety standard with respect to the interruption of the connections.

To this end, the invention provides for a system for communicating between a user terminal and a server station, the user terminal being configured to move along a one-dimensional track and to communicate with the server station via a cellular network in a first communication mode,
wherein the system comprises a link manager and a plurality of fixed intermediate communication terminals, which are distributed along the track with respective predetermined spacings,
wherein the intermediate communication terminals are configured to communicate with the user terminal via direct radio communication and the link manager is configured to communicate with the server station,
wherein the link manager is further configured to communicate with the intermediate communication terminals via said cellular network such that the user terminal is able to communicate with the server station via the intermediate communication terminals and the link manager in a second communication mode, and
wherein the link manager is configured to receive downlink data from the server station and distribute it to at least two intermediate communication terminals, at least one of which communicates the downlink data to the user terminal via direct radio communication in the second communication mode.

Thus, the invention uses an additional network structure, which can be seen as a type of redundancy network if the communication via the cellular network is unavailable or breaks down. On the other hand, the additional network structure can also be used as the main communication path for the user terminal such that most or all of the communication between the user terminal and the server station (railway service server) is performed over the additional network structure.

The user terminal uses the capability of an already present transceiver to communicate with the intermediate communication terminals and in turn does not need any additional hardware elements. Preferably, the direct radio communication with the intermediate communication terminals and the communication over the cellular network is performed according to different specifications of the same standard, e.g., LTE. The difference is that the direct radio communication with the intermediate communication terminals is free of a cellular network structure, i.e., no base stations are used for communication between the user terminal and the intermediate communication terminals.

The communication between the user terminal with the server station and the intermediate communication terminals with the server station, respectively, is performed through the same cellular network, i.e., via the same set of base stations of the cellular network.

This dual network structure is especially reliable since the user terminal or the server station can switch from one communication mode to the other in case of interruptions within the network. By means of this, even hardware outages within parts of the network structure can temporarily be circumvented by using the respective other communication mode.

The link manager of the system can be embodied as a separate or integral device of the server station and serves to distribute data to a plurality of intermediate communication terminals. This increases the possibility that at least one of the intermediate communication terminal can communicate the data successfully to the user terminal. The intermediate communication terminals have the same communication capabilities as the user terminal, i.e., they are capable of communication via the cellular network as well as direct radio communication. Thus, to construct the intermediate communication terminals, communication modules such as those used for the user terminal can simply be embedded into static structures along the track and there is no need for additional technical development of these intermediate communication terminals.

In addition to multiplying downlink data for the user terminal by the link manager, the link manager can also provide features for receiving the same uplink data multiple times. To this end, preferably each intermediate communication terminals is configured to receive uplink data from the user terminal and forward it to the link manager via said cellular network, and the link manager is configured to receive said uplink data from the intermediate communication terminals and to forward the uplink data only once to the server station if it has received the same uplink data from at least two intermediate communication terminals. One way this can be done is to simply forward the first received uplink data from the link manager to the server station and discard any additional same uplink data via the link manager. Alternatively, the link manager can perform quality measurements on all received same uplink data and forward the uplink data with the best quality measurement to the server station.

To determine which intermediate communication terminals should communicate the downlink data to the user terminal via direct radio communication, various methods can be employed. Preferably, each intermediate communication terminal is configured to determine that the user terminal is in its vicinity after receiving a discovery message which is periodically emitted by the user terminal, and each intermediate communication terminal is further configured to only transmit downlink data to the user terminal after it has established that the user terminal is in its vicinity. The reception of a discovery message in an intermediate communication terminal serves as an indication of whether a user terminal is within the communication range of a certain intermediate communication terminal. Additional measurements can be employed to determine whether downlink data should be communicated to the user terminal, e.g., by measuring a received signal strength of the discovery message. In this case, downlink data is only transmitted to the user terminal if the received signal strengths lies above a predetermined threshold, which is then defined as the vicinity of the intermediate communication terminal.

The determination of whether a user terminal is within the vicinity of a respective intermediate communication terminal can firstly be used to decide whether to attempt communication with the user terminal, as described above, or secondly for the link manager to determine to which intermediate communication terminals that downlink data is to be forwarded. To this end, preferably each intermediate communication terminal is configured to report to the link manager if the user terminal is in its vicinity and the link manager is configured to distribute the downlink data to all those intermediate communication terminals in whose vicinity the user terminal is located.

To avoid interference between the intermediate communication terminals that transmit downlink data to the user terminal, the intermediate communication terminals are configured to apply a random time offset when communicating downlink data to the user terminal. Alternatively, the intermediate communication terminals can employ predetermined time offsets or different communication resources.

If an intermediate communication terminal has received downlink data from the link manager but the user terminal is not in its vicinity anymore or communication to a user terminal has failed due to other reasons, the intermediate communication terminals can act as a peer-to-peer network so as to forward downlink data to another intermediate communication terminal capable of communicating with the user terminal. To this end, preferably at least one intermediate communication terminal is configured to forward downlink data received from the link manager to an adjacent intermediate communication terminal if it cannot establish a communication with the user terminal, and the adjacent intermediate communication terminal is configured to communicate this downlink data to the user terminal.

Additionally to the intermediate communication terminals, separate structures that can communicate with the intermediate communication terminals as well as with the user terminal can be employed, too, hereinafter called secondary communication terminals. These secondary communication terminals may but do not have to be able to communicate via the cellular network. To this end, preferably at least one of the intermediate communication terminals is configured to transmit downlink data to the user terminal via a secondary communication terminal which is located in a zone in which communication via the cellular network cannot be established, wherein the secondary communication terminal is configured to communicate with the intermediate communication terminal and the user terminal via direct radio communication. The secondary communication terminals can be placed within tunnels, forests surrounding the track, buildings such as train stations, or the like, and allow the user terminal to communicate in the second communication mode even in areas where the cellular network is not available for communication.

As previously mentioned, the second communication mode can be used if communication via the first communication mode breaks down or vice-versa. However, it is especially preferred if the first and the second communication mode are used simultaneously to enhance the reliability of the communication. Thereby, the reliability of the downlink and uplink transfer of data can be increased. For example, the server station can compare both received uplink data and use the one with a higher quality measure, and the user terminal can compare both received downlink data and use the one with a higher quality measure, too.

The intermediate communication terminals can also serve to provide an intra or inter train communication that does not utilize the cellular network. To this end, the user terminal is located at one end of a train and a further user terminal is located at the other end of the train, or the user terminal is located on one train and the further user terminal is located on another train, and the intermediate communication terminals are configured to provide a communication between the user terminal and the further user terminal by receiving user data via direct radio communication from the user terminal and transmitting said user data to the further user terminal via direct radio communication. In this manner, the intermediate communication terminals serve a dual purpose, namely firstly to provide a communication between the user terminal and the server station and secondly to provide communication between two user terminals without the need for them to communicate via the cellular network.

Because the user terminal may receive the same downlink data multiple times in the second communication mode, there may be a need for the user terminal to distinguish whether received downlink data is in fact new data or already received data. Preferably, the downlink data is communicated as packaged data and each data packet has a packet number such that the user terminal can identify the correct order of received data packets.

Sometimes the link manager transmits downlink data to an intermediate communication terminal, but the intermediate communication terminal cannot immediately transmit this downlink data to the user terminal. This can happen due to momentary communication outages, for example. So as not to transfer unnecessary downlink data from an intermediate communication terminal to the user terminal, preferably the discovery messages include an expected packet number, and the intermediate communication terminals are configured to transmit the packaged data having the expected packet number to the user terminal and discard packaged data that does not comply with the expected packet number. Thereby, communication resources for direct communication can be freed up, making the communication system more efficient.

Preferably, the communication between the user terminal and the intermediate communication terminals is performed by a device-to-device communication according to the D2D standard of the LTE standard. Thus, these equipments can use LTE for the direct communication with the intermediate communication terminals as well as over the cellular network to communicate with the server station. The LTE-D2D standard is especially preferred because it defines discovery messages that can be used for locating the user terminal along the track as outlined before.

Alternatively, the communication between the user terminal and the intermediate communication terminals is performed according to an IEEE 802.11x standard. If such a standard, also commonly known as the WiFi standard, is used, slight modifications may be performed to introduce discovery messages depending on the embodiment chosen.

To provide communication between the intermediate communication terminals and the user terminal, communication resources or channel resources can be reserved for direct communication. The available channel resources for direct communication can be either predetermined and pre-stored in the user terminal and/or the intermediate communication terminals, or a node (base station) of the cellular network can broadcast the location of these channel resources for direct communication.

User terminals used for trains may employ two different types of communication, guaranteed bit rate (GBR) and non-guaranteed bit rate (NGBR) communications. Preferably, the intermediate communication terminals are configured to only communicate NGBR traffic with the user terminal. Since NGBR traffic makes up the most amount of traffic, the first communication mode, over which GBR communications are usually taking place, can be put in an idle mode as long as no GBR services are requested. This provides for an especially energy efficient operation.

The invention shall now be explained in more detail below on the basis of preferred exemplary embodiments thereof with reference to the accompanying drawings, in which:
Fig. 1 shows a schematic view of a network for communicating between a train and a server station;
Fig. 2 shows a block diagram of the communication of Fig. 1;
Fig. 3 shows the use of the system of Fig. 1 to extend coverage areas of a cellular network;
Fig. 4 shows an embodiment of the system of Fig. 1, in which a part of the railway track lies within a tunnel; and
Fig. 5 shows a secondary use of the system of Fig. 1 for intra train communication.

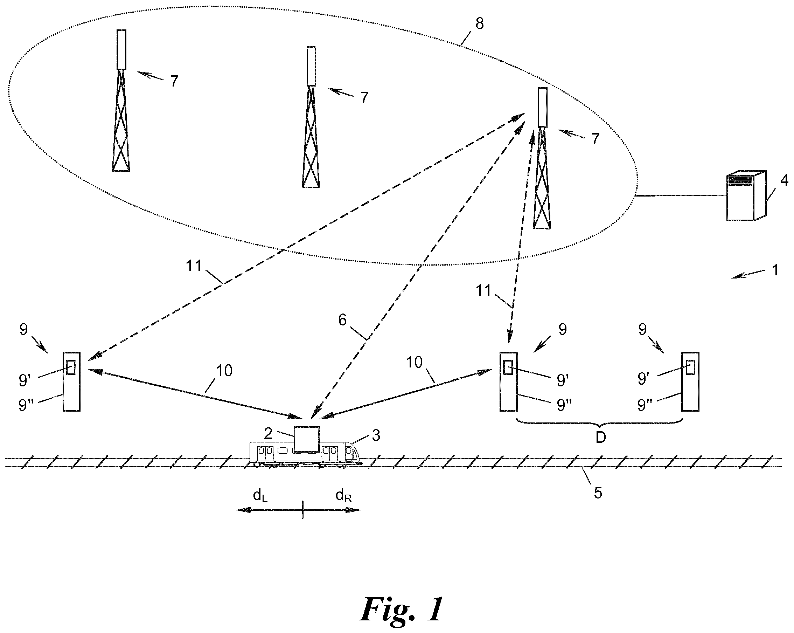

Fig. 1 shows a system 1 for communicating between a user terminal 2 on a train 3 and a server station 4. The train 3 and thus the user terminal 2 move along a railway track 5. The track 5 is one-dimensional in the sense that the train 3 and thus the user terminal 2 can only move in one direction d_{R} (and the respective backward direction d_{L}), notwithstanding branches and intersections of the track 5. To control the train 3, amongst others, the user terminal 2 receives safety critical control messages as well as other data from the server station 4, which may be, for example, a railway service centre or any other information server.

While the present embodiment is specifically dedicated to a user terminal 2 on a train 3, the system 1 can in the same manner be employed for user terminals 2 travelling on other one-dimensional tracks 5 such as cars driving along streets or ships travelling along rivers or canals.

The user terminal 2 can employ two different communication modes when communicating with the server station 4. In the first communication mode, the user terminal 2 establishes a communication 6 via a cellular network 8 comprising nodes or base stations 7, three of which are schematically shown in Fig. 1. The base stations 7 are connected to the server station 4 via the cellular network 8 and/or other networks. Communication 6 over the cellular network 8 is performed according to standards known in the art, e.g., GSM (Global System for Mobile Communications), LTE (Long Term Evolution), UMTS (Universal Mobile Telecommunications System), etc.

In the second communication mode, the user terminal 2 communicates with one or more fixed intermediate communication terminals 9 via direct radio communication 10. Direct radio communication 10 is performed by a device-to-device communication according to the D2D standard of the LTE standard. The D2D standard has been introduced to LTE in LTE release 12, see for example 3GPP TS 23.303 V12.5.9, June 2015; or 3GPP TS 36.300 V12.6.0, June 2015. Alternatively, other direct communication standards can be used too, for example all variants of IEEE 802.11x, also known as WLAN or WiFi.

The intermediate communication terminals 9 communicate data over the cellular network 8 via the base stations 7 to the server station 4. Thus, in the second communication mode, the user terminal 2 does not need to rely on the availability of the cellular network 8 but has a possible direct radio communication 10 with the intermediate communication terminals 9 available.

The fixed intermediate communication terminals 9 comprise a communication module 9' which is embedded into or mounted onto a static structure 9". The static structure 9" may be a building, a platform, a concrete column, a steel pylon, or the like, and the communication module 9' may have the same hardware structure as the user terminal 2. The fixed intermediate communication terminals 9 are thus static and are spaced apart from each other by predetermined spacings D.

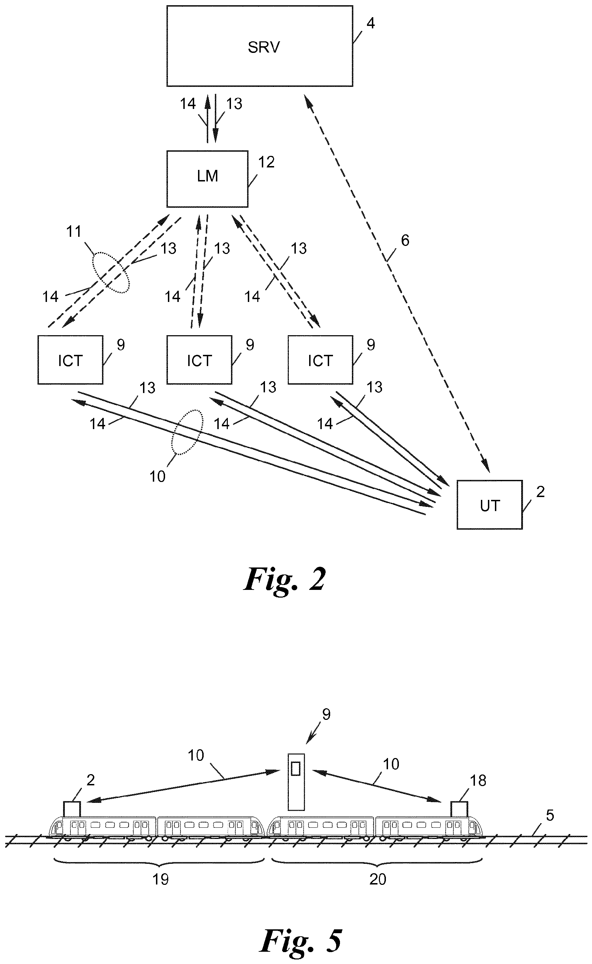

Fig. 2 shows the communications within the system 1 between the user terminal 2 and the server station 4 in detail. As outlined above, the user terminal 2 can engage in a communication 6 with the server station 4 via the cellular network 8 in a first communication node. In the second communication mode, the intermediate communication terminals 9 receive downlink data 13 from and communicate uplink data 14 to the server station 4 via a link manager 12. It can be seen that the link manager 12 directly communicates with the server station 4, and may even be embodied within the server station 4 for this purpose. Alternatively, the link manager 12 can also be embodied as an external device connected to the server station 4.

The link manager 12 serves to manage the communications 10, 11 (Fig. 1) of the otherwise independently acting intermediate communication terminals 9. In principle, the user terminal 2 can communicate with any intermediate communication terminal 9 that is close enough such that direct radio communication 10 can be performed. Because it is not always clear to the server station 4 which intermediate communication terminal 9 is best suited for communication with the user terminal 2, the link manager 12 receives downlink data 13 from the server station 4 and distributes it to at least two intermediate communication terminals 9 via the cellular network 8. In turn, at least one of the intermediate communication terminals 9 communicates the downlink data 13 to the user terminal 2 via direct radio communication 10 in the second communication mode.

In some embodiments, the link manager 12 distributes the downlink data to those intermediate communication terminals 9 that are in the range of an estimated position of the user terminal 2. The position can be estimated in various ways, for example by means of a GPS signal of the user terminal 2 communicated to the link manager 12 or the server station 4 in the first or second communication mode. Alternatively, the user terminal 2 can also periodically emit discovery messages via direct radio communication 10 such that the intermediate communication terminals 9 can detect the discovery messages. When the intermediate communication terminals 9 receive the discovery message, they know that the user terminal 2 is within their vicinity. The intermediate communication terminals 9 can also measure the received signal strength of the discovery message to more exactly determine the position of the user terminal 2.

The discovery messages can comprise a unique identification of the user terminal 2 such that the system 1 can be configured to determine the presence of multiple user terminals 2 on the tracks 5, for example user terminals 2 carried by different trains 3 or more than one user terminal 2 on a train 3.

The intermediate communication terminals 9 in turn report to the link manager 12 if the user terminal 2 is in its vicinity such that the link manager 12 can determine the intermediate communication terminals 9 to which downlink data 13 should be distributed to. The link manager 12 can for this purpose manage a list of intermediate communication terminals 9 in whose vicinity the user terminal 2 is currently located.

Once the intermediate communication terminals 9 have received downlink data 13 from the link manager 12, they can communicate said downlink data 13 to the user terminal 2 via direct radio communication 10. Depending on the embodiment, the intermediate communication terminals 9 may only attempt to communicate downlink data 13 to the user terminal 2 via direct radio communication 10 if they have established that the user terminal 2 is in their vicinity. For this purpose, all of the position determination methods outlined above can be employed.

When the user terminal 2 is in the vicinity of two or more intermediate communication terminals 9, and all of those intermediate communication terminals 9 have received the downlink data 13 from the link manager 12, they may all attempt to communicate the downlink data 13 to the user terminal 2. Since the simultaneous transmission of data by more than one intermediate communication terminal 9 would cause interferences for the user terminal 2, the intermediate communication terminals 9 apply a random time offset when communicating downlink data 13 to the user terminal 2. Alternatively, each intermediate communication terminal 9 could apply a predetermined time offset which was assigned to the respective intermediate communication terminal 9 in advance. Further alternatively, each intermediate communication terminal 9 could use a different communication resource, e.g., frequency band, over which the downlink data 13 is transmitted.

The multiple intermediate communication terminals 9 can also be used to improve the reliability of receiving uplink data in the server station 4. For this, each intermediate communication terminal 9 receives uplink data 14 from the user terminal 2. To achieve this, the user terminal 2 transmits uplink data 14 over predetermined channel resources without addressing specific intermediate communication terminals 9 such that all communication terminals 9 within the communication range of the user terminal 2 receive this uplink data 14. In turn, each intermediate communication terminal 9 that has received uplink data 14 forwards it to the link manager 12 via the cellular network 8.

If the link manager 12 establishes that same uplink data 14 has been received more than once, it forwards the uplink data 14 only once to the server station 4. To this end, the link manager 12 can use this uplink data 14 that has been received from the intermediate communication terminal 9 closest to the user terminal 2, which can be determined, e.g., by means of measuring the received signal strength or signal-to-noise ratio of the received uplink data 14 in the intermediate communication terminals 9. Other quality measurements may additionally or alternatively be employed as well, or the link manager 12 can just select one of the uplink data 14 at random for forwarding it to the server station 4.

To ensure that the user terminal 2 receives downlink data 13 and that the server station 4 receives uplink data 14 in the correct order, the downlink and uplink data 13, 14 is communicated as packaged data and each data packet has a packet number. For the downlink data 13, the server station 4 can provide the downlink data 13 already as data packets which are encapsulated in a specific frame structure, depending on the type of direct communication used between the intermediate communication terminals 9 and the user terminal 2. The packet number can be, for example, a time stamp or a counter that is incremented by one for each provided packet.

After the user terminal 2 has received a data packet with a specific packet number, it can emit a discovery message as described above which contains the next expected packet number. If an intermediate communication terminal 9 receives such a discovery message with an expected packet number, it consequently transmits the data packet with the corresponding packet number to the user terminal 2 if this data packet has already been received from the link manager 12. If an intermediate communication terminal 9 receives a discovery message with an expected packet number, and it has data packets stored corresponding to packet numbers smaller than the expected packet number, it can discard these previously received, untransmitted data packets. Furthermore, the packet number helps the link manager 12 to determine which uplink data packets are identical.

The direct radio communication 10 between the user terminal 2 and the intermediate communication terminals 9 is performed on specific channel resources separate from those used by the cellular network 8, e.g., frequency bands and/or time slots used by the cellular network 8 are different from frequency bands and/or time slots used for direct radio communication 10. The channel resources available for direct radio communication 10 are broadcast to the user terminal 2 and/or the intermediate communication terminals 9 by the base stations 7 of the cellular network 8, for example. Alternatively, they can first be communicated to the intermediate communication terminals 9, which then broadcast them to the user terminal 2. Further alternatively, the channel resources could already be pre-stored in the user terminal 2 and/or the intermediate communication terminals 9.

In the second communication node, preferably only non-guaranteed bit rate (NGBR) traffic is communicated. This traffic includes, for example, signalling messages between the user terminal 2 and external signalling servers. On the other hand, guaranteed bit rate (GBR) traffic, such as voice calls operated in an individual mode or group call mode, is preferably only communicated in the first communication mode.

In addition to increasing the reliability of communications between the user terminal 2 and the railway server 4 by selectively switching between the first and second communication mode or by using them parallely at the same time, the link manager 12 and the intermediate communication terminals 9 provide further uses within the system 1.

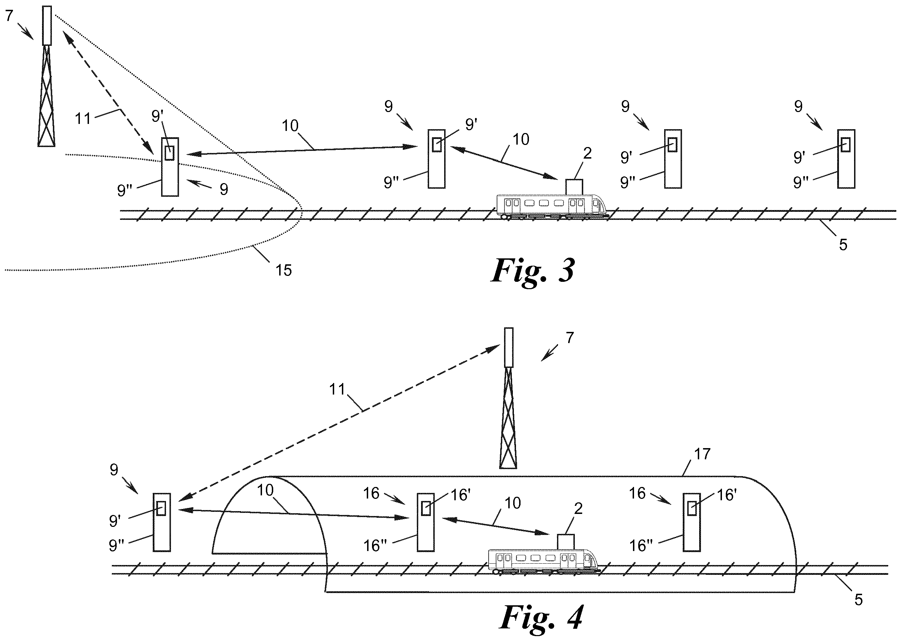

Fig. 3 shows that by means of the intermediate communication terminals 9 the reach or coverage area 15 of the cellular network 8 can be extended. If the user terminal 2 is located outside of the coverage area 15 of the base stations or nodes 7 of the cellular network 8, the intermediate communication terminals 9 can employ a sort of peer-to-peer communication to extend the coverage area 15. To achieve this, an intermediate communication terminal 9 can forward, via direct radio communication 10, downlink data 13 received from the link manager 12 to a next intermediate communication terminal 9, for example an adjacent intermediate communication terminal 9, which may not itself be able to communicate over the cellular network 8. This may be because this adjacent intermediate communication terminal 9 lies outside of the coverage area 15 of all nodes 7 of the cellular network 8 or within a different cellular network. When the adjacent intermediate communication terminal 9 receives the downlink data 13, it transmits it to the user terminal 2 via direct radio communication 10. This method may be generalized in such a way that downlink data 13 is forwarded from the adjacent intermediate communication terminal 9 in a chain-like manner to another adjacent intermediate communication terminal 9 and from there to the next intermediate communication terminal 9 and so forth until one of the intermediate communication terminals 9 can establish communication via direct radio communication 10 with the user terminal 2.

Fig. 4 shows the usage of so-called secondary communication terminals 16 which do not have to be configured to communicate over the cellular network 8. These secondary communication terminals 16 are located in zones in which communication via the cellular network 8 cannot be established, for example in a tunnel 17, forest, or building such as a train station. Similarly to the peer-to-peer communication between intermediate communication terminals 9, the secondary communication terminals 16 receive downlink data 13 from intermediate communication terminals 9 via direct radio communication 10 and in turn transmit received downlink data 13 to the user terminal 2 via direct radio communication 10. The secondary communication terminals 16 may have a reduced hardware capability with respect to the intermediate communication terminals 9 since they do not have to be configured to communicate over the cellular network 8. Similarly to the intermediate communication terminals 9, the secondary communication terminals 16 may comprise a communication module 16' and a static structure 16".

Fig. 5 relates to another practical use for the intermediate communication terminals 9 which is not correlated to communication with the server station 4. Fig. 5 shows a train 3 having a user terminal 2 and a further user terminal 18 on board. The user terminal 2 is located on one end of the train 3 and the further user terminal 18 is located at the other end of the train 3. Such situations occur when fixed combinations of wagons 19, 20 are linked together in such a manner that the driver position of the wagons 19, 20 lie at the respective ends of the train 3. In this context, ensuring a reliable communication between the two wagons 19, 20 is a challenge. One option is for the user terminals 2, 18 to communicate via the cellular network 8. However, here they can also communicate over the intermediate communication terminals 9. To achieve this, an intermediate communication terminal 9 that is capable of communicating with both user terminals 2, 18 receives data from the user terminal 2 via direct radio communication 10 and transmits said data to the further user terminal 18 via direct radio communication 10. By means of this, low-latency communication between the user terminals 2, 18 can be achieved. Preferably, the predetermined spacings D are each less than the length of the train 3. Here, an unsuccessful communication can indicate problems with train integrity, e.g., a separation of wagons 19, 20.

Such a communication between multiple user terminals 2, 18 can also be achieved between trains 3 that are not connected to each other. For example, communication between trains 3 travelling in the same or passing in the respective other direction on closeby tracks can be achieved. Such communications are also desirable for trains waiting in railway stations, roaming in shunting yards, or the like. Here too, an intermediate communication terminal 9 receives data from a user terminal 2 located on one train 3 and transmits it to a further user terminal 18 located on another train 3 via direct radio communication 10.

The link manager 12 can also broadcast alarm messages to specific intermediate communication terminals 9 to signal danger on the track 5 such that user terminals 2 approaching a dangerous area can be warned in a geographically selective manner.

The invention is not restricted to the specific embodiments described in detail herein, but encompasses all variants, combinations and modifications thereof that fall within the framework of the appended claims.

## Claims

1. System for communicating between a user terminal (2) and a server station (4), the user terminal (2) being configured to move along a one-dimensional track (5) and to communicate with the server station (4) via a cellular network (8) in a first communication mode,
wherein the system (1) comprises a link manager (12) and a plurality of fixed intermediate communication terminals (9), which are distributed along the track (5) with respective predetermined spacings (D),
wherein the intermediate communication terminals (9) are configured to communicate with the user terminal (2) via direct radio communication (10) and the link manager (12) is configured to communicate with the server station (4),
wherein the link manager (12) is further configured to communicate with the intermediate communication terminals (9) via said cellular network (8) such that the user terminal (2) is able to communicate with the server station (4) via the intermediate communication terminals (9) and the link manager (12) in a second communication mode, and
wherein the link manager (12) is configured to receive downlink data (13) from the server station (4) and distribute it to at least two intermediate communication terminals (9), at least one of which communicates the downlink data (13) to the user terminal (2) via direct radio communication (10) in the second communication mode.

2. System according to claim 1, wherein each intermediate communication terminal (9) is configured to receive uplink data (14) from the user terminal (2) and forward it to the link manager (12) via said cellular network (8),
and wherein the link manager (12) is configured to receive said uplink data (14) from the intermediate communication terminals (9) and to forward the uplink data (14) only once to the server station (4) if it has received the same uplink data (14) from at least two intermediate communication terminals (9).

3. System according to claim 1 or 2, wherein each intermediate communication terminal (9) is configured to determine that the user terminal (2) is in its vicinity after receiving a discovery message which is periodically emitted by the user terminal (2), and
and each intermediate communication terminal (9) is further configured to only transmit downlink data (13) to the user terminal (2) after it has established that the user terminal (2) is in its vicinity.

4. System according to claim 3, wherein each intermediate communication terminal (9) is configured to report to the link manager (12) if the user terminal (9) is in its vicinity and the link manager (12) is configured to distribute the downlink data (13) to all those intermediate communication terminals (9) in whose vicinity the user terminal (2) is located.

5. System according to any one of the claims 1 to 4, wherein the intermediate communication terminals (9) are configured to apply a random time offset when communicating downlink data (13) to the user terminal (2).

6. System according to any one of the claims 1 to 5, wherein at least one intermediate communication terminal (9) is configured to forward downlink data (13) received from the link manager (12) to an adjacent intermediate communication terminal (9) if it cannot establish a communication (10) with the user terminal (2), and the adjacent intermediate communication terminal (9) is configured to communicate this downlink data (13) to the user terminal (2).

7. System according to any one of the claims 1 to 6, wherein at least one of the intermediate communication terminals (9) is configured to transmit downlink data (13) to the user terminal (2) via a secondary communication terminal (16) which is located in a zone (17) in which communication via the cellular network (8) cannot be established,
wherein the secondary communication terminal (16) is configured to communicate with the intermediate communication terminal (9) and the user terminal (2) via direct radio communication (10).

8. System according to any one of the claims 1 to 7, wherein the first and the second communication mode are used simultaneously to enhance the reliability of the communication.

9. System according to any one of the claims 1 to 8, wherein the user terminal (2) is located at one end of a train (3) and a further user terminal (18) is located at the other end of the train (3), or the user terminal (2) is located on one train (3) and the further user terminal (18) is located on another train, and wherein the intermediate communication terminals (9) are configured to provide a communication (10) between the user terminal (2) and the further user terminal (18) by receiving user data via direct radio communication (10) from the user terminal (2) and transmitting said user data to the further user terminal (18) via direct radio communication (10).

10. System according to any one of the claims 1 to 9, wherein the downlink data (13) is communicated as packaged data and each data packet has a packet number such that the user terminal (2) can identify the correct order of received data packets.

11. System according to claim 3 in combination with claim 9, wherein the discovery messages include an expected packet number, and
wherein the intermediate communication terminals (9) are configured to transmit the packaged data having the expected packet number to the user terminal (2) and discard packaged data that does not comply with the expected packet number.

12. System according to any one of the claims 1 to 11, wherein the communication (10) between the user terminal (2) and the intermediate communication terminals (9) is performed by a device-to-device communication according to the D2D standard of the LTE standard.

13. System according to any one of the claims 1 to 11, wherein the communication (10) between the user terminal (2) and the intermediate communication terminals (9) is performed according to an IEEE 802.11x standard.

14. System according to any one of the claims 1 to 13, wherein the system (1) comprises means (7, 9) configured to broadcast the channel resources available for direct radio communication to the user terminal (2) and/or the intermediate communication terminals (9).

15. System according to any one of the claims 1 to 14, wherein the intermediate communication terminals (9) are configured to only communicate non-guaranteed bit rate traffic with the user terminal (2).

## Patentansprüche

1. System zur Kommunikation zwischen einem Benutzerterminal (2) und einer Serverstation (4), wobei das Benutzerterminal (2) dafür ausgebildet ist, sich entlang einer eindimensionalen Bahn (5) zu bewegen und mit der Serverstation (4) über ein zellulares Netzwerk (8) in einem ersten Kommunikationsmodus zu kommunizieren,
wobei das System (1) einen Verbindungsmanager (12) und eine Mehrzahl von festen Zwischenkommunikationsterminals (9) umfasst, welche entlang der Bahn (5) mit jeweils vorbestimmten Abständen (D) verteilt sind,
wobei die Zwischenkommunikationsterminals (9) dafür ausgebildet sind, mit dem Benutzerterminal (2) über direkte Funkkommunikation (10) zu kommunizieren, und der Verbindungsmanager (12) dafür ausgebildet ist, mit der Serverstation (4) zu kommunizieren,
wobei der Verbindungsmanager (12) weiters dafür ausgebildet ist, mit den Zwischenkommunikationsterminals (9) über das genannte zellulare Netzwerk (8) zu kommunizieren, sodass das Benutzerterminal (2) über die Zwischenkommunikationsterminals (9) und den Verbindungsmanager (12) mit der Serverstation (4) in einem zweiten Kommunikationsmodus kommunizieren kann, und
wobei der Verbindungsmanager (12) dafür ausgebildet ist, Downlink-Daten (13) von der Serverstation (4) zu empfangen und an zumindest zwei Zwischenkommunikationsterminals (9) zu verteilen, von denen zumindest eines die Downlink-Daten (13) dem Benutzerterminal (2) über direkte Funkkommunikation (10) im zweiten Kommunikationsmodus kommuniziert.

2. System nach Anspruch 1, wobei jedes Zwischenkommunikationsterminal (9) dafür ausgebildet ist, Uplink-Daten (14) von dem Benutzerterminal (2) zu empfangen und an den Verbindungsmanager (12) über das genannte zellulare Netzwerk (8) weiterzuleiten,
und wobei der Verbindungsmanager (12) dafür ausgebildet ist, die genannten Uplink-Daten (14) von den Zwischenkommunikationsterminals (9) zu empfangen und die Uplink-Daten (14) nur einmal an die Serverstation (4) weiterzuleiten, wenn er die gleichen Uplink-Daten (14) von zumindest zwei Zwischenkommunikationsterminals (9) empfangen hat.

3. System nach Anspruch 1 oder 2, wobei jedes Zwischenkommunikationsterminal (9) dafür ausgebildet ist, nach dem Empfangen einer Auffindungsnachricht, welche periodisch vom Benutzerterminal (2) gesendet wird, zu ermitteln, dass das Benutzerterminal (2) in seiner Nähe ist, und
wobei jedes Zwischenkommunikationsterminal (9) weiters dafür ausgebildet ist, Downlink-Daten (13) dem Benutzerterminal (2) nur dann zu senden, wenn es festgestellt hat, dass das Benutzerterminal (2) in seiner Nähe ist.

4. System nach Anspruch 3, wobei jedes Zwischenkommunikationsterminal (9) dafür ausgebildet ist, dem Verbindungsmanager (12) zu berichten, ob das Benutzerterminal (2) in seiner Nähe ist, und der Verbindungsmanager (12) dafür ausgebildet ist, die Downlink-Daten (13) an all jene Zwischenkommunikationsterminals (9) zu verteilen, in deren Nähe sich das Benutzerterminal (2) befindet.

5. System nach einem der Ansprüche 1 bis 4, wobei die Zwischenkommunikationsterminals (9) dafür ausgebildet sind, einen zufälligen Zeitversatz anzuwenden, wenn sie Downlink-Daten (13) dem Benutzerterminal (2) kommunizieren.

6. System nach einem der Ansprüche 1 bis 5, wobei zumindest ein Zwischenkommunikationsterminal (9) dafür ausgebildet ist, die vom Verbindungsmanager (12) empfangenen Downlink-Daten (13) an ein benachbartes Zwischenkommunikationsterminal (9) weiterzuleiten, wenn es keine Verbindung (10) mit dem Benutzerterminal (2) herstellen kann, und das benachbarte Zwischenkommunikationsterminal (9) dafür ausgebildet ist, diese Downlink-Daten (13) dem Benutzerterminal (2) zu kommunizieren.

7. System nach einem der Ansprüche 1 bis 6, wobei zumindest eines der Zwischenkommunikationsterminals (9) dafür ausgebildet ist, Downlink-Daten (13) dem Benutzerterminal (2) über ein Hilfskommunikationsterminal (16) zu senden, das sich in einem Bereich (17) befindet, in welchem keine Kommunikation über das zellulare Netzwerk (8) hergestellt werden kann,
wobei das Hilfskommunikationsterminal (16) dafür ausgebildet ist, mit den Zwischenkommunikationsterminals (9) und dem Benutzerterminal (2) über direkte Funkkommunikation (10) zu kommunizieren.

8. System nach einem der Ansprüche 1 bis 7, wobei der erste und der zweite Kommunikationsmodus gleichzeitig verwendet werden, um die Zuverlässigkeit der Kommunikation zu erhöhen.

9. System nach einem der Ansprüche 1 bis 8, wobei das Benutzerterminal (2) sich an einem Ende eines Zuges (3) und ein weiteres Benutzerterminal (18) sich am anderen Ende des Zuges (3) befindet, oder das Benutzerterminal (2) sich auf einem Zug (3) und das weitere Benutzerterminal (18) sich auf einem anderen Zug befindet, und wobei die Zwischenkommunikationsterminals (9) dafür ausgebildet sind, eine Kommunikation (10) zwischen dem Benutzerterminal (2) und dem weiteren Benutzerterminal (18) herzustellen, indem sie Benutzerdaten über direkte Funkkommunikation (10) von dem einen Benutzerterminal (2) empfangen und die genannten Benutzerdaten über direkte Funkkommunikation (10) an das weitere Benutzerterminal (18) senden.

10. System nach einem der Ansprüche 1 bis 9, wobei die Downlink-Daten (13) als paketierte Daten kommuniziert werden und jedes Datenpaket eine Paketnummer hat, sodass das Benutzerterminal (2) die richtige Reihenfolge der empfangenen Datenpakete erkennen kann.

11. System nach Anspruch 3 in Verbindung mit Anspruch 9, wobei die Auffindungsnachrichten eine erwartete Paketnummer enthalten, und
wobei die Zwischenkommunikationsterminals (9) dafür ausgebildet sind, die paketierten Daten, welche die erwartete Paketnummer haben, an das Benutzerterminal (2) zu übermitteln und die paketierten Daten, die nicht mit der erwarteten Paketnummer übereinstimmen, zu verwerfen.

12. System nach einem der Ansprüche 1 bis 11, wobei die Kommunikation (10) zwischen dem Benutzerterminal (2) und den Zwischenkommunikationsterminals (9) durch eine Device-to-Device-Kommunikation nach dem D2D-Standard des LTE-Standards ausgeführt wird.

13. System nach einem der Ansprüche 1 bis 11, wobei die Kommunikation (10) zwischen dem Benutzerterminal (2) und den Zwischenkommunikationsterminals (9) nach einem IEEE-802.11x-Standard ausgeführt wird.

14. System nach einem der Ansprüche 1 bis 13, wobei das System (1) Mittel (7, 9) aufweist, welche dafür ausgebildet sind, die für direkte Funkkommunikation verfügbaren Kanalressourcen an das Benutzerterminal (2) und/oder die Zwischenkommunikationsterminals (9) auszusenden.

15. System nach einem der Ansprüche 1 bis 14, wobei die Zwischenkommunikationsterminals (9) dafür ausgebildet sind, nur in nicht-bitratengarantiertem Verkehr mit dem Benutzerterminal (2) zu kommunizieren.

## Revendications

1. Système de communication entre un terminal utilisateur (2) et une station serveur (4), le terminal utilisateur (2) étant configuré pour se déplacer le long d'une piste (5) unidimensionnelle et pour communiquer avec la station serveur (4) par le biais d'un réseau cellulaire (8) dans un premier mode de communication,
où le système (1) comprend un gestionnaire de liaison (12) et une pluralité de terminaux de communication intermédiaires (9) fixes qui sont distribués le long de la piste (5) avec des espacements (D) respectifs prédéterminés,
où les terminaux de communication intermédiaires (9) sont configurés pour communiquer avec le terminal utilisateur (2) par le biais d'une communication radio directe (10) et le gestionnaire de liaison (12) est configuré pour communiquer avec la station serveur (4),
où le gestionnaire de liaison (12) est en outre configuré pour communiquer avec les terminaux de communication intermédiaires (9) par le biais dudit réseau cellulaire (8) de sorte que le terminal utilisateur (2) est capable de communiquer avec la station serveur (4) par le biais des terminaux de communication intermédiaires (9) et le gestionnaire de liaison (12) dans un second mode de communication, et
où le gestionnaire de liaison (12) est configuré pour recevoir des données en liaison descendante (13) à partir de la station serveur (4) et pour les distribuer à au moins deux terminaux de communication intermédiaires (9), dont au moins un communique les données en liaison descendante (13) au terminal utilisateur (2) par le biais d'une communication radio directe (10) dans le second mode de communication.

2. Système selon la revendication 1, dans lequel chaque terminal de communication intermédiaire (9) est configuré pour recevoir des données en liaison montante (14) à partir du terminal utilisateur (2) et pour transmettre celles-ci au gestionnaire de liaison (12) par le biais dudit réseau cellulaire (8),
et dans lequel le gestionnaire de liaison (12) est configuré pour recevoir des données en liaison montante (14) à partir des terminaux de communication intermédiaires (9) et pour transmettre les données en liaison montante (14) uniquement une fois à la station serveur (4) si il a reçu les mêmes données en liaison montante (14) à partir d'au moins deux terminaux de communication intermédiaires (9).

3. Système selon la revendication 1 ou 2, dans lequel chaque terminal de communication intermédiaire (9) est configuré pour déterminer que le terminal utilisateur (2) est dans son voisinage après la réception d'un message de détection qui est périodiquement émis par le terminal utilisateur (2), et
chaque terminal de communication intermédiaire (9) est en outre configuré pour transmettre des données en liaison descendante (13) au terminal utilisateur (2) uniquement après qu'il ait établi que le terminal utilisateur (2) est dans son voisinage.

4. Système selon la revendication 3, dans lequel chaque terminal de communication intermédiaire (9) est configuré pour informer le gestionnaire de liaison (12) si le terminal utilisateur (2) est dans son voisinage et le gestionnaire de liaison (12) est configuré pour distribuer les données en liaison descendante (13) à tous les terminaux de communication intermédiaires (9) en question au voisinage desquels est situé le terminal utilisateur (2).

5. Système selon l'une quelconque des revendications 1 à 4, dans lequel les terminaux de communication intermédiaires (9) sont configurés pour appliquer un décalage en temps aléatoire lors de la communication de données en liaison descendante (13) au terminal utilisateur (2).

6. Système selon l'une quelconque des revendications 1 à 5, dans lequel au moins un terminal de communication intermédiaire (9) est configuré pour transmettre des données en liaison descendante (13) reçues à partir du gestionnaire de liaison (12) à un terminal de communication intermédiaire (9) adjacent s'il ne peut pas établir une communication (10) avec le terminal utilisateur (2), et le terminal de communication intermédiaire (9) adjacent est configuré pour communiquer ces données en liaison descendante (13) au terminal utilisateur (2).

7. Système selon l'une quelconque des revendications 1 à 6, dans lequel au moins un des terminaux de communication intermédiaires (9) est configuré pour transmettre des données en liaison descendante (13) au terminal utilisateur (2) par le biais d'un terminal de communication secondaire (16) qui est situé dans une zone (17) dans laquelle une communication par le biais du réseau cellulaire (8) ne peut pas être établie,
dans lequel le terminal de communication secondaire (16) est configuré pour communiquer avec le terminal de communication intermédiaire (9) et le terminal utilisateur (2) par le biais d'une communication radio directe (10).

8. Système selon l'une quelconque des revendications 1 à 7, dans lequel les premier et second modes de communication sont utilisés simultanément pour améliorer la fiabilité de la communication.

9. Système selon l'une quelconque des revendications 1 à 8, dans lequel le terminal utilisateur (2) est situé à une extrémité d'un train (3) et un autre terminal utilisateur (18) est situé à l'autre extrémité du train (3), ou le terminal utilisateur (2) est situé sur un train (3) et l'autre terminal utilisateur (18) est situé sur un autre train, et où les terminaux de communication intermédiaires (9) sont configurés pour procurer une communication (10) entre le terminal utilisateur (2) et l'autre terminal utilisateur (18) en recevant des données d'utilisateur par le biais de la communication radio directe (10) à partir du terminal utilisateur (2) et en transmettant lesdites données d'utilisateur à l'autre terminal utilisateur (18) par le biais d'une communication radio directe (10).

10. Système selon l'une quelconque des revendications 1 à 9, dans lequel ces données en liaison descendante (13) sont communiquées sous forme de données en paquets et chaque paquet de données a un numéro de paquet de sorte que le terminal utilisateur (2) puisse identifier l'ordre correct des paquets de données reçus.

11. Système selon la revendication 3 en combinaison avec la revendication 9, dans lequel le message de détection comporte un numéro de paquet attendu, et
dans lequel les terminaux de communication intermédiaires (9) sont configurés pour transmettre les données en paquets ayant le numéro de paquet attendu au terminal utilisateur (2) et pour ne pas prendre en compte des données en paquets qui ne correspondent pas avec le numéro de paquet attendu.

12. Système selon l'une quelconque des revendications 1 à 11, dans lequel la communication (10) entre le terminal utilisateur (2) et les terminaux de communication intermédiaires (9) est effectuée par une communication de dispositif à dispositif selon la norme D2D de la norme LTE.

13. Système selon l'une quelconque des revendications 1 à 11, dans lequel la communication (10) entre le terminal utilisateur (2) et les terminaux de communication intermédiaires (9) est effectuée selon une norme IEEE 802.11x.

14. Système selon l'une quelconque des revendications 1 à 13, où le système (1) comprend des moyens (7, 9) configurés pour diffuser des ressources de canal disponibles pour une communication radio directe au terminal utilisateur (2) et/ou aux terminaux de communication intermédiaires (9).

15. Système selon l'une quelconque des revendications 1 à 14, dans lequel les terminaux de communication intermédiaires (9) sont configurés pour communiquer uniquement en trafic en débit binaire non garanti avec le terminal utilisateur (2).
